# EUROPEAN PATENT APPLICATION

(11) **EP 3 450 627 A1**
(43) Date of publication of application: **06.03.2019**
(21) Application number: 18192040.6
(22) Date of filing: 31.08.2018
(51) Int. Cl.: E01C 11/22, E01C 5/06

(54) **PAVING STONE AND PAVING OR FLOOR WITH SUCH PAVING STONES**

(30) Priority: 04.09.2017 BE 201705617
(71) Applicant: SCC-DESIGN, besloten vennootschap met beperkte aansprakelijkheid, 2870 Puurs (BE)
(72) Inventor: VERBRUGGEN, Robert, 2870 Puurs (BE)
(74) Representative: Donné, Eddy

(57) **Abstract**

Paving stone with a beam-shaped hollow body with a buffer cavity (12) for water or other liquids, which buffer cavity (12) when the paving stone (1) is placed in a road surface or the like, is bordered by a top wall (2) with a top surface (3) and four sidewalls (4-7) with a side face (8-11) on the outer side of the paving stone (1), characterised in that in the side faces (8-11) there is no recess which forms a liquid connection between the top surface (3) of the paving stone (1) and said buffer cavity (12) in the paving stone (1).

## Description

The present invention relates to a paving stone, more specifically a paving stone that can be applied to lay streets, squares, car parks, etc.

Paving stones are already known for example for the temporary buffering of rainwater after heavy rainfall, whereby the buffered water is gradually released to the underlying soil without the formation of puddles or flooding because the water cannot be absorbed quickly enough by the soil.

Paving stones are also applied for example in industrial zones to buffer contaminated rainwater, for example under a coal storage area, whereby under the paving stones impermeable plastic foil or the like is applied for example.

The known paving stones are provided with an internal buffer cavity in the form of a tubular horizontal passage between two opposite sides of the paving stone.

Such paving stones are placed in half-brick bond, in other words, in rows which are staggered over a half width of the paving stone in relation to each other with said sides against each other, such that the buffer cavities in the paving stones are covered in a particular row by the paving stones in the adjacent rows.

In at least one of said sides a vertical recess has been provided which forms a connection between the top surface of the paving stone and the buffer cavity to be able to collect water through this connection in the buffer cavity, and in at least one of the sides in question another recess has been provided which forms a connection between the buffer cavity and the underlying soil in order to, in this way, enable a delayed release of the water in the buffer cavity to the soil.

Such paving stone is known for example from BE 1.017.437 of the same applicant.

A drawback of the two side faces connected with each other by the buffer cavity, is that over time the joint sand between the paving stones washes into the buffer cavity.

This means that the paving stones cannot be jointed properly and long-term and that because of this they will come loose. This also means the edges are damaged because the paving stones hit each other due to the traffic going across them.

Because the white joint sand washes to this buffer cavity, seeds of plants and weeds can also wash into the buffer cavity where they can germinate and grow, which is a contamination and also decreases the buffer capacity.

Such known paving stones are produced by pouring concrete in a mould, whereby the paving stones are formed in a tilted position with said side faces horizontal and the passage between these side faces vertical.

Due to this production method, there is a tolerance difference of approximately 2 millimetres on the width of the paving stones between said side faces.

A drawback of this is that when placing the paving stones with the passage horizontally and in a half-brick bond, the paving stones do not connect closely against each other, such that the joints become even wider and said drawback of the joint sand washing away becomes even greater.

The purpose of the present invention is to provide a solution for one or more of the aforementioned and other disadvantages.

To this end, the invention relates to a paving stone with a beam-shaped hollow body with a buffer cavity for water or other liquids, which buffer cavity when the paving stone is placed in a road surface or the like, is bordered by a top wall with a top surface and four sidewalls with a side face on the outer side of the paving stone, characterised in that in the side faces there is no recess which forms a liquid connection between the top surface of the paving stone and said buffer cavity in the paving stone.

Because the buffer cavity is not connected with the walking or driving surface of the road surface, there is no risk of contamination by sand and seeds that could wash into the buffer cavity.

Preferably the buffer cavity of the paving stone is open toward the bottom of the paving stone and the paving stone in other words does not have a base.

Because of this the water buffered in the buffer cavities can easily penetrate into the water permeable subsoil once the soil is no longer saturated after a heavy downpour.

Preferably the buffer cavity in the paving stone is enclosed by the four sidewalls which extend all the way down.

The joint sand, i.e. white sand or another granulate, therefore remains in the narrow joints between the paving stones. The paving stones thus form a sleek whole and can be traditionally placed and jointed.

To drain the water from the top surface to the buffer cavities, the paving stone is preferably entirely or at least partially made of a water permeable material, for example water permeable concrete, whereby for example the upper layer of the paving stone is made of this water permeable material.

The water thus seeps through the water permeable concrete into the buffer cavity. This means the buffer cavity is completed shielded from the driving or walking surface. This means no contamination by sand and seeds is possible.

Alternatively or additionally at least one of the sidewalls in its side face is provided with a pervious joint, for example in the form of a gutter-shaped recess which forms a connection between the top surface and the bottom of the paving stone but does not form a direct connection between the buffer cavity and the top surface of the paving stone.

In this way, the water infiltrates immediately into the subsoil. If the subsoil is saturated, the water is buffered in the buffer cavity and infiltrates after the rain shower. Preferably, water permeable concrete is also used for the sidewalls.

In case the upper layer is made of a water permeable layer, no suction cups can be used to manipulate the paving stones when placing them. Then it is preferable that at least two opposite side faces of the paving stone are provided at the top with a recess for the jaws of a placement clamp for the mechanical placing of the paving stones.

In case pervious joints are provided in two opposite side faces, they can also serve as said recesses for the jaws of a placement clamp.

To divide the buffered water over the different paving stones it is preferable that the paving stones are provided along their bottom with passages or recesses that form a connection between the side faces and the buffer cavity in the paving stone, whereby preferably these recesses are such that they connect to each other when the paving stones are adjacent to each other in a half-brick bond.

According to a preferred embodiment, the paving stone, according to the invention, has the form of a hollow cube with a width and height of the order of magnitude of 22 cm and an open bottom and the sidewalls have a thickness of the order of magnitude of 4 cm and the top wall a thickness of the order of magnitude of 8 cm.

Thus, one obtains a robust paving stone that can bear big loads.

Furthermore, one obtains a relatively large buffer cavity of 14x14x14cm which is able to buffer large quantities of water up to about 56 litres per m² paving or floor area, which is well above the legal minimum of 25 litres per m².

The dimensions can of course also be different depending on the desired buffer capacity.

By making the top of the buffer cavity dome-shaped and making the vertical corners of the buffer cavity round, the bearing capacity of the paving stone and the pressure distribution in the paving stone can be improved even more.

Alternatively, the buffer cavity can be made cylindrical with a round head and a diameter of about 14cm.

The invention also relates to a paving or floor which is made with paving stones according to the invention which with their open bottom facing down have been laid in a half-brick bond in rows which are staggered over the half width of the paving stones, whereby the recesses or passages below the sidewalls of the paving stones are connected with each other in different rows.

In some cases, it can be useful to provide a waterproof layer under the floor, for example in the form of PVC foil or the like. That is for example useful for storage areas of coal whereby the rainwater that falls on the storage floor, is contaminated and must not seep into the soil, whereas it is important that the contaminated water is buffered and can be drained to give the coal at the bottom the chance to dry.

The paving stones can be formed in a casting mould with the top surface of the paving stone facing down or up.

The tolerance differences in height of the paving stone have no influence on the width of the paving stone that shows no tolerance differences. Consequently, the paving stones can always connect right against each other without the tolerance differences being able to accumulate when laying the stones or without unwanted wide joints forming between the paving stones.

Due to this way of casting, the casting material can be compacted to avoid unwanted air bubbles without this having an influence on the breadthways dimensional stability of the paving stones.

The casting method allows the paving stones to be cast in layers with different characteristics, for example by combining water permeable concrete with ordinary concrete, or colour enhancing granulates can be used which have been subjected to various post-treatments such as washing, blasting, bush hammering, polishing, etc.

When casting with the top surface facing downwards, a relief can easily be given to the top surface of the paving stone by providing the base of the casting mould with the negative form of the desired relief.

This can be useful for example to provide the top surface of the paving stone with studs for blind paving slabs or with lines to make rumble strips next to dirt roads or to make architectural drawings.

In this case it can be advantageous to make the base of the mould interchangeable and with different patterns.

The paving stones do not necessarily have to be made of concrete but other raw materials also come into consideration. We are talking here about concrete, but this can also be made with other raw materials such as granulates that are bound with resin or granulates that are bound with CO₂ instead of with cement.

Top surface and bottom surface of the paving stone are defined here with the paving stone in situ with the top surface turned up, to form a driving or walking surface of a road, floor, car park or the like.

With the intention of better showing the characteristics of the invention, hereinafter, by way of an example without any limiting nature, a number of preferred embodiments are described of a paving stone according to the invention, with referral to the enclosed figures, wherein:
figure 1 shows a perspective view of a paving stone according to the invention;
figure 2 shows a perspective view of the paving stone of figure 1 seen from below;
figure 3 shows a cross-section according to the line III-III in figure 1;
figure 4 shows the part indicated in figure 3 with the circle F4 on a larger scale;
figure 5 shows a laying pattern of a paving with paving stones according to figure 1;
figure 6 shows a bottom view of the paving stones in figure 5;
figures 7 to 11 show variants of a paving stone according to the invention;
figure 12 shows a perspective view of a casting mould for a paving stone according to the invention;
figure 13 shows an alternative casting mould;
figure 14 shows a paving stone that was formed in the casting mould of figure 13, but after removing the paving stone mould.

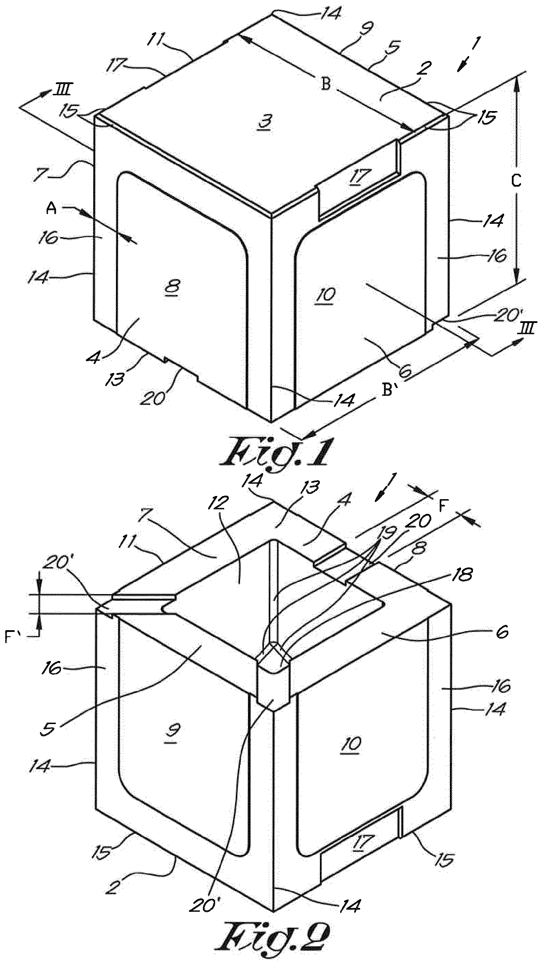

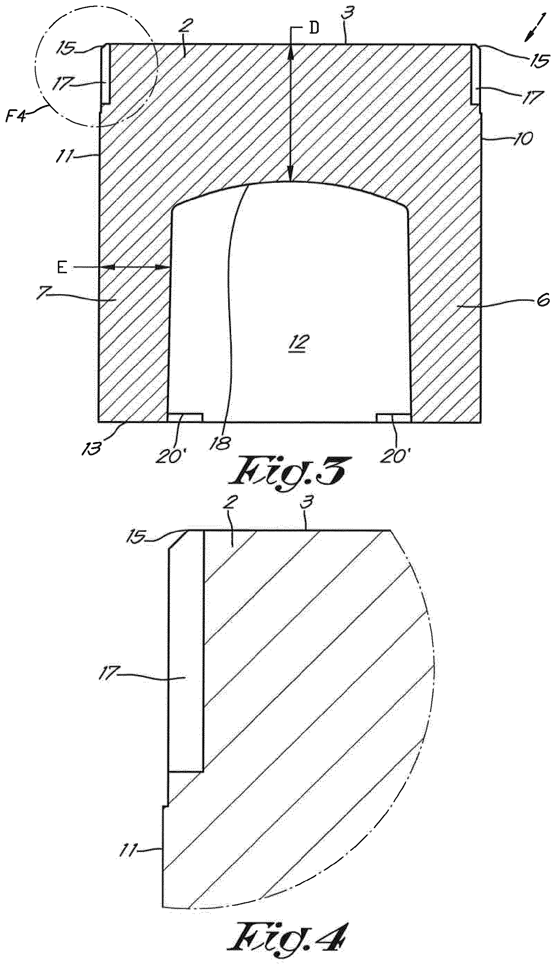

The paving stone 1 shown in figures 1 to 4 possesses a beam-shaped hollow body, in this case a hollow cube of concrete or the like, with a top wall 2 with a top surface 3; four sidewalls 4 to 7, each bordered by a side face 8 to 11 on the outer side of the paving stone 1 and an internal buffer cavity 12 which is open on the bottom 13 of the paving stone 1 and which is enclosed between the top wall 2 and the sidewalls 4 to 7.

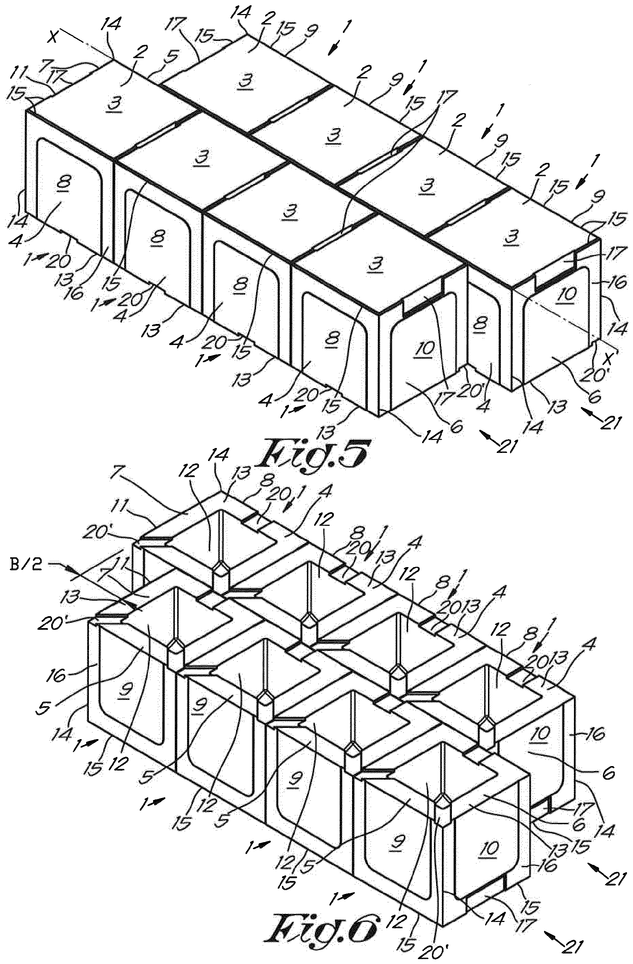

Preferably the vertical edges 14 and the top edges 15 of the side faces 8 to 11 are made as shatterproof edges because the side faces 8 to 11 are provided with an elevation 16 with a thickness of for example 1 mm over a certain width A from the edges 14 and 15, such that the edges of the paving stones 1 laid in a half-brick bond as shown in figure 5, do not come into contact over a certain height with adjacent paving stones 1 and therefore cannot be damaged either.

In two opposite sidewalls 6 and 7, a recess 17 has been provided in the elevation 16 at the top for the jaws of a placement clamp with which the paving stones can be manipulated when they are being laid.

The paving stones shown in the figures are cube-shaped with a width B and B' of about 22 cm and a height or thickness C also of about 22 cm. Another dimensioning is not excluded of course.

The top wall 2 has, for example, a thickness D of about 8 cm and the sidewalls 4 to 7 a thickness E of about 4 cm, such that a cavity remains of about 14x14x14 cm with a relatively large buffer capacity.

Such paving stone 1 with relatively thick walls has a big bearing capacity that can still be improved by making the bottom 18 of the top wall 2 as a dome-shaped vault and by rounding the buffer cavity 12 in the corners 19.

The opposite sidewalls 4 and 5 are provided on the bottom 13 with gutter-shaped recesses, a central recess 20 in the sidewall 4 and two diagonal recesses 20' in the corners of the sidewall 5 respectively which extend symmetrically in relation to the bisectors of these corners. As shown in figure 2 the recesses 20 and 20' have a width F and F' of for example 4 cm and a depth of for example 1 cm.

When the paving stones 1 are laid in half-brick bond on a permeable subsoil, as shown in the figure 5 and 6, for example on a car park, the paving stones 1 are laid in rows 21, whereby the paving stones 1 lie against each other in every row 21 with their side faces 10 and 11 and with their other side faces 8 and 9 against the side faces 8 and 9 of the paving stones 1 of the adjacent rows 21.

The rows 21 are staggered according to their longitudinal direction X-X' over a half width B/2 of the paving stones 1 in relation to each other, such that, as can be seen in figure 6, the recesses 20 of the paving stones 1 connect in one row to the recess 20' of the paving stones 1 in a following row 21, such that the buffer cavities of the paving stones are in connection with each other via the recesses 20 and 20'.

It is clear than in this case in the side faces 8 to 11 there is no vertical connection between the top of the paving stones 1 which form the road surface of the car park and the buffer cavities 12 in the paving stones 1.

In this case the water can seep to the soil via the narrow joints and in case of saturation it can be buffered in the buffer cavities 12 and divided over the paving stones 1 via the recesses 20 and 20'.

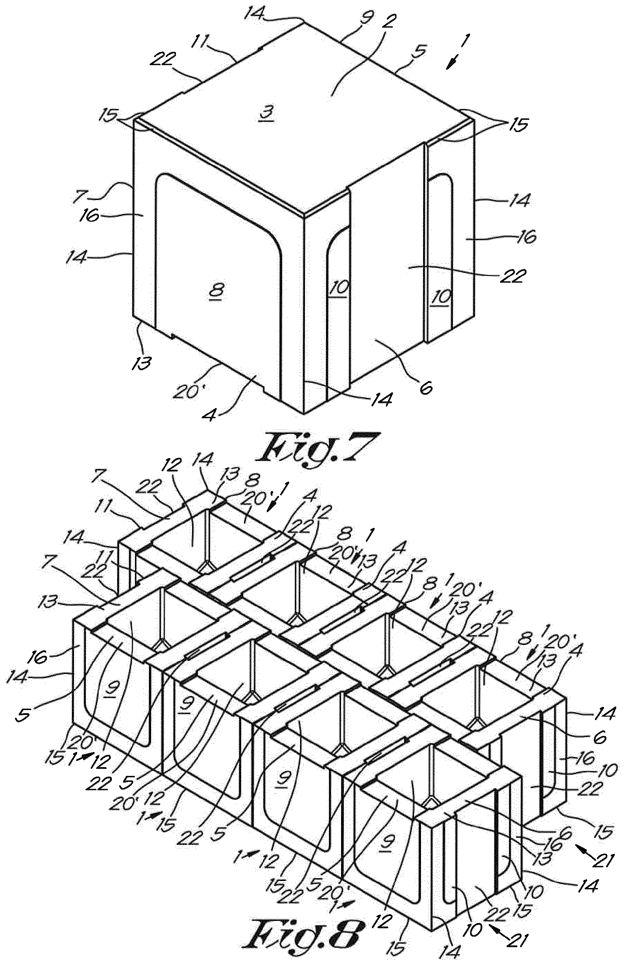

Figure 7 shows an alternative embodiment of a paving stone 1 according to the invention, whereby in this case a pervious widened joint 22 has been provided in the side faces 10 and 11 in the form of a gutter-shaped recess which runs over the entire height C of the paving stone 1 and thus forms a connection between the top surface 3 and the bottom 13 of the paving stone 1.

This allows the rainwater to be drained to the soil more quickly.

In the alternative form of paving stone 1 of figure 7 the recesses 20 and 20' are centrally located, in this case in both opposite sidewalls 4 and 5 and made with a width F and F' which is greater than the half width B/2 of the sidewalls in question 4 and 5, such that in this case too the recesses 20 and 20' partially overlap in the longitudinal direction X-X' of the rows 21 and thus form a connection between the buffer cavities 13 of the paving stones 1 in the different rows 21 in relation to each other as can be seen in figure 8.

Another possibility to drain the water to the buffer cavities 12 can consist of making the paving stones 1 at least partially of a water permeable material such as water permeable concrete, whereas the rest of the stone 1 can be made of ordinary concrete for the strength of the paving stone 1.

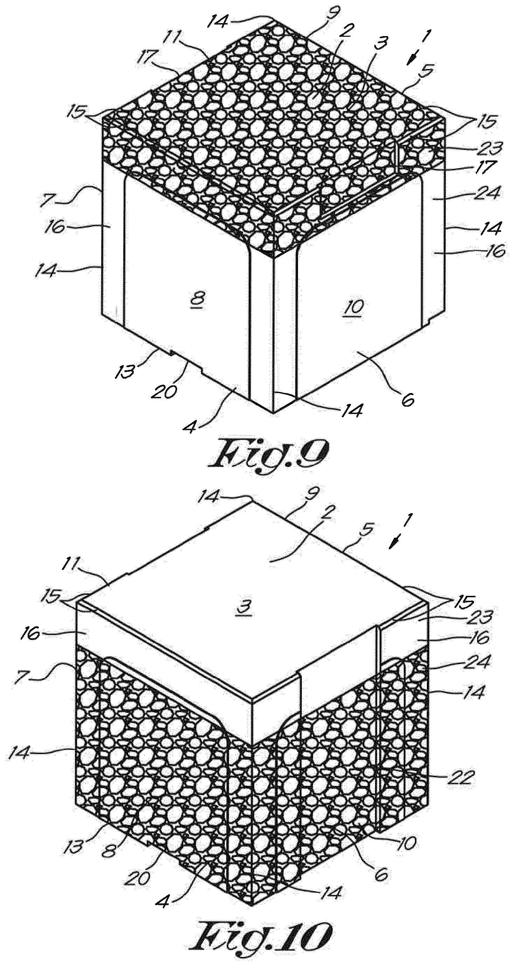

Figure 9 shows an example of such paving stone 1 whereby an upper layer 23 is made of water permeable concrete and the lower section 24 of ordinary concrete, whereas in figure 10 an example is given whereby, vice versa, the upper section 23 is made of ordinary concrete and the lower section 24 of water permeable concrete.

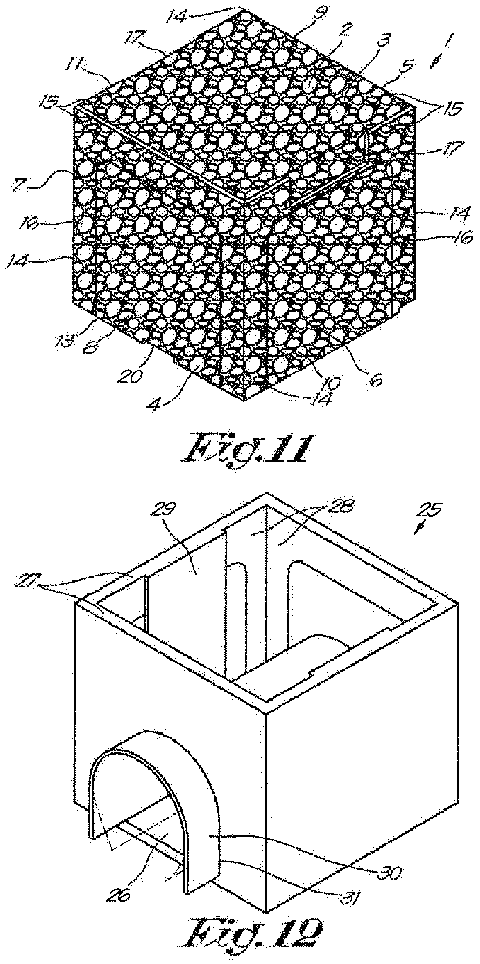

Figure 11 shows an example of a paving stone 1 made completely of water permeable concrete.

Figure 12, by way of example, shows a casting mould 25 to form a paving stone 1 according to the invention according to the model of figure 7 but whereby in this case the central recesses 20 and 20' are identical and extend over the full height of the buffer cavity 12.

The casting mould 25 is in this case formed as an empty shell with a base 26 and four upstanding walls 27 which on the inside are provided with a relief 28 to form the elevations 16 of the shatterproof edges 14 and 15 and a relief 29 to form the pervious joint 22 of the paving stone 1.

To form the buffer cavity 12 and the recesses 20 and 20', a tube or beam 30 is used which is applied flush through holes 31 in two opposite walls 27 of the casting mould 25.

To form a paving stone, liquid concrete is poured in the casting mould 25, whereby the bottom 13 of the paving stone 1 is formed against the base 26 of the casting mould 25.

The liquid concrete can also be poured in the casting mould 25 in layers, for example first water permeable concrete to form the upper layer 23 of the paving stone 1 and then ordinary concrete for the lower section 24 of the paving stone 1.

Once the concrete has set sufficiently the formed paving stone 1 can be removed from the mould by turning over the casting mould 25. If the form of the tube 30 does not allow the formed paving stone 1 to be removed from the mould in this way, for example in case of a tube shape as indicated in the dashed line shown in figure 12, the tube 30 can first be pulled out of the casting mould 25 in an axial direction to remove the stone from the mould, in order to then turn over the casting mould 25.

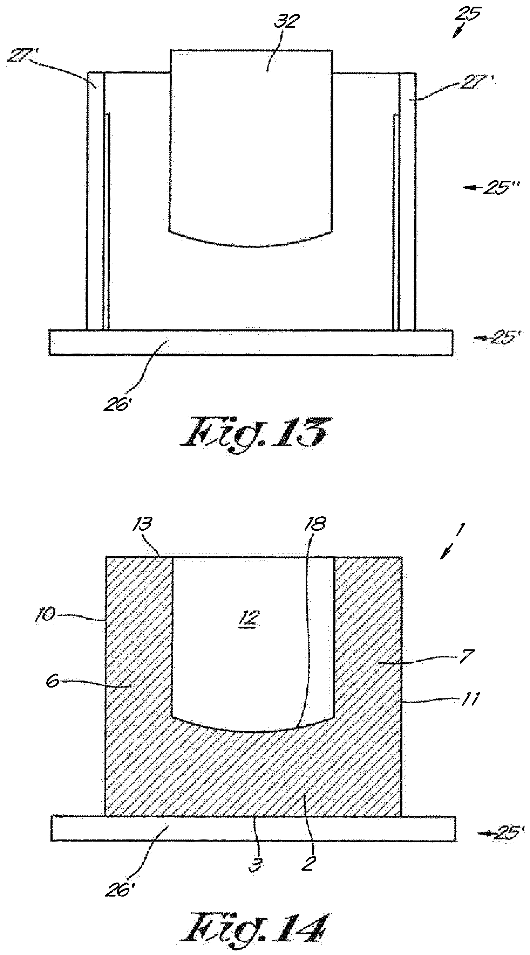

Figure 13 shows another type of casting mould 25 which in this case is composed of two loose or detachable parts, respectively a bottom mould 25' in the form of a base 26' and a top mould 25" which is composed of four walls 27' and a stamp 32 to form the buffer cavity 12.

In this case the top surface 2 of the paving stone 1 is formed against the base 26' of the casting mould 25.

The base 26' can be provided as such with an adapted relief to provide the top surface of the paving stone 1 to be formed with a particular pattern, for example the pattern for anti-slip rumble strips.

When the concrete paving stone 1 is set sufficiently, the top mould 25" can be pulled up while the formed buffer plank remains resting on the base 26' until it is set sufficiently for further manipulation for storage on pallets or the like.

The paving stones do not necessarily have to be mounted on a permeable subsoil but can be useful on an impermeable base, for example in the construction of a warehouse for coal.

The present invention is by no means limited to the embodiment described above and shown in the drawings, but a paving stone according to the invention can be realised according to many different variants without departing from the scope of the invention.

## Claims

1. Paving stone with a beam-shaped hollow body with a buffer cavity (12) for water or other liquids, which buffer cavity (12), when the paving stone (1) is placed in a road surface or the like, is bordered by a top wall (2) with a top surface (3) and four sidewalls (4-7) with a side face (8-11) on the outer side of the paving stone (1), **characterised in that** in the side faces (8-11) there is no recess which forms a liquid connection between the top surface (3) of the paving stone (1) and said buffer cavity (12) in the paving stone (1).

2. Paving stone according to claim 1, **characterised in that** the buffer cavity (12) is open toward the bottom (13) of the paving stone (1).

3. Paving stone according to claim 1 or 2, **characterised in that** the buffer cavity (12) in the paving stone (1) is enclosed by the top wall (2) and the sidewalls (4-7).

4. Paving stone according to any one of the previous claims, **characterised in that** at least two opposite sidewalls (4,5), a first and a second sidewall respectively, continue to the bottom (13) of the paving stone (1) and that these sidewalls (4,5) are provided with passages or recesses at the bottom which form a connection between the side face of the sidewall in question and the buffer cavity, whereby the passages or recesses (20, 20') are such that when the paving stones (1) are placed against each other in rows (21) in half-brick bond with these sidewalls (4, 5), these passages or recesses (20, 20') are connected with each other such that the buffer cavities (12) of the paving stones (1) of adjacent rows (21) are in connection with each other.

5. Paving stone according to claim 4, **characterised in that** said passages or recesses (20,20') are formed by a central recess (20) in the first sidewall (4) and two gutter-shaped recesses (20') in the corners of the opposite second sidewall (5).

6. Paving stone according to claim 4, **characterised in that** said passages or recesses (20,20') are formed by a central recess in the two opposite first and second sidewalls (4, 5), which recesses (20, 20') have a width (F) which is greater than the half width (B/2) of the sidewalls (4,5) in question.

7. Paving stone according to any one of the previous claims, **characterised in that** at least in one of the sidewalls (6,7), which connect said first and second sidewall (4,5) with each other, a pervious widened joint (22) is provided in the side face (8,9) in the form of a gutter-shaped recess which forms a connection between the top surface (3) and the bottom (13) of the paving stone (1) .

8. Paving stone according to any one of the previous claims, **characterised in that** it is at least partially made of a water permeable material.

9. Paving stone according to claim 8, **characterised in that** it is entirely made of a water permeable material or that only an upper or lower layer is made of a water permeable material.

10. Paving stone according to claim 8 or 9, **characterised in that** it is made of concrete, particularly of water permeable concrete for the section that is water permeable.

11. Paving stone according to any one of the previous claims, **characterised in that** at least two opposite side faces (10,11) at the top are provided with a recess (17) for the jaws of a placement clamp.

12. Paving stone according to any one of the previous claims, **characterised in that** it has the form of a hollow cube with a width (B,B') and height (C) of the order of magnitude of 22 cm.

13. Paving stone according to claim 12, **characterised in that** the sidewalls (4 to 7) have a thickness (D) of the order of magnitude of 4 cm and the top wall (2) has a thickness (E) of the order of magnitude of 8 cm.

14. Paving stone according to claim 12, **characterised in that** the buffer cavity (12) has a dome-shaped top (18) and that the vertical corners (19) are rounded.

15. Paving stone according to claim 12, **characterised in that** the buffer cavity (12) is cylindrical with a round head and a diameter of about 14 cm.

16. Paving stone according to any one of the previous claims, **characterised in that** it is provided with shatterproof edges (14,15) because the vertical edges (14) and the top edges (15) of the side faces (8-11) over a certain width (A) are provided with an elevation (16).

17. Paving or floor, **characterised in that** the paving or floor is made with paving stones (1) according to any one of the previous claims by laying the paving stones (1) in rows in a half-brick bond (21) which are staggered over the half width (B/2) of the paving stones (1), whereby the paving stones (1) of consecutive rows (21) lie against each other with their first and second side faces (8,9).

18. Paving or floor according to claim 17, **characterised in that** a waterproofing layer is provided under the paving stones (1).

19. Casting mould to cast a paving stone according to any one of the claims 1 to 16, **characterised in that** the casting mould (25) has the negative form of the paving stone (1) to be formed, whereby the base (26,26') of the casting mould (25) has the negative form of the bottom (13) of the paving stone (1) to be formed.

20. Casting mould to form a paving stone according to any one of the claims 1 to 16, **characterised in that** the casting mould (25) has the negative form of the paving stone (1) to be formed, whereby the base (26,26') of the casting mould (25) has the negative form of the top surface (3) of the paving stone (1) to be formed.

21. Casting mould according to claim 20, **characterised in that** the casting mould (25) consists of at least two pieces (25',25"), i.e. a bottom mould (25') in the form of a base (26') and a removable top mould (25").

22. Method to form a paving stone according to any one of the claims 1 to 16, **characterised in that** a casting mould (25) is used according to any one of the claims 19 to 21 whereby a castable material is poured in layers in the casting mould (25) to form at least two layers (23,24) of a different material, for example a water permeable layer and a non-water permeable layer.
